# EUROPEAN PATENT APPLICATION

(11) **EP 3 466 616 A1**
(43) Date of publication of application: **10.04.2019**
(21) Application number: 18205422.1
(22) Date of filing: 25.04.2017
(51) Int. Cl.: B25J 11/00, B62D 57/028, B62D 57/032

(54) **COLLABORATIVE MANUFACTURING SYSTEM AND METHOD**

(30) Priority: 25.04.2016 US 201662327042 P
(62) Divisional of application: 17721305.5
(71) Applicant: Siemens Aktiengesellschaft, 80333 München (DE)
(72) Inventor: BANK, Hasan Sinan, Princeton, NJ New Jersey 08540 (US); DALLORO, Livio, Plainsboro, NJ New Jersey 08536 (US)
(74) Representative: Horn Kleimann Waitzhofer Patentanwälte PartG mbB

(57) **Abstract**

A collaborative manufacturing system (500) includes a collaborative control system (501) comprising a computer processor configured to receive a computer aided design (CAD) of an object (550) to be manufactured and to output a manufacturing procedure for manufacturing the object (550). A cloud network in communication with the collaborative control system (501) is configured to store information relating to the manufacturing procedure created by the collaborative control system (501). The system also includes a plurality of mobile agile manufacturing platforms (540-545), each agile manufacturing platform (540-545) in communication with the cloud network, and configured to receive information relating to the manufacture of the object (550) in the form of manufacturing tasks assigned to each of the plurality of mobile agile manufacturing platforms (540-545), and wherein each agile manufacturing platform (540-545) includes a communication module for transmitting state information about the state of the manufacturing task assigned to an corresponding agile manufacturing platform (540-545), which exchange with other or take over autonomously the assigned tasks based on their priority and platform's status. The state information is stored in the cloud network.

## Description

### TECHNICAL FIELD

This disclosure relates to automated manufacturing. More particularly, this disclosure relates to robot assisted manufacturing.

### BACKGROUND

In areas from aerospace to automotive and from medical and dental, subtractive and additive manufacturing play a key role in the fabrication of a system or a part representation before and after the final release. In subtractive manufacturing, a desired geometry is achieved by removal of raw materials comprising the object being manufactured. Conversely, additive manufacturing establishes the fabrication of a desired geometry following a bottom to top approach. Layers of raw material are deposited in subsequent layers to achieve a desired three-dimensional (3D) structure. In both additive and subtractive manufacturing, a designer creates a 3D geometry with the help of software including Computer Aided Design (CAD) packages. CAD packages save the information relating to the design to computer files (e.g. CAD files). The CAD files may be provided to one or more Computer-Aided Manufacturing (CAM) packages. The CAM packages translate user-defined settings and predetermined parameters corresponding to the fabrication to a machine tool code language. By way of non-limiting example, G-Code, based on the RS-274 standard may be used as a machine tool code language. Machine tools, such as 3D printers or computer numerical control (CNC) machines fabricate the desired geometry based on G-code within constraints imposed by the tool's limit of workspace.

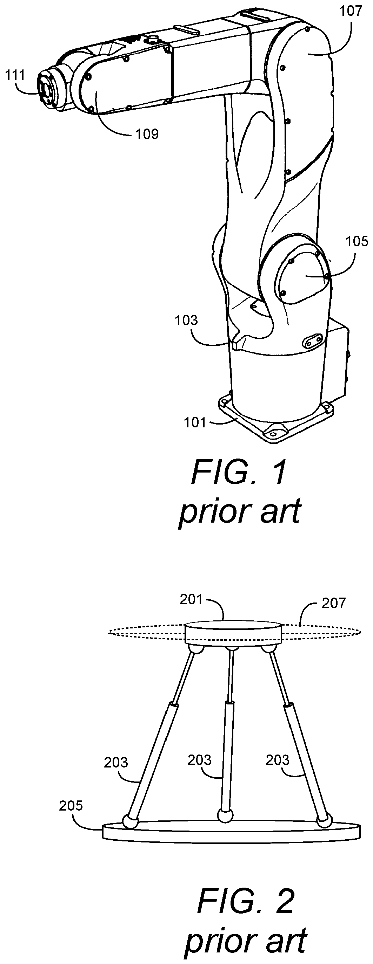

As a result, machine tools suffer when manufacturing larger pieces due to limitations in the freedom of movement of the tool due to space limitations imposed by the layout of the factory floor. Additional constraints are further imposed based on the tool's geometry itself. For example, a robot arm may be limited in reach, or certain areas may be inaccessible to the machine tool based on the arm's articulation ability through joints, pivot points, hinges, spindles and the like. These limitations persist and frustrate any attempt to perform additive or subtractive manufacturing in austere environments such as outdoor environments, including but not limited to desert, ocean, or space applications. FIG. 1 is an illustration of a conventional robotic arm. The arm includes a base plate 101 for securing the robotic arm to a work floor. Articulated joints 105, 107 and 109 allow the arm segments to pivot relative to one another. Additionally, rotational joints 103 provide additional degrees of freedom. A tool mount 111 is provided to attach appropriate machine tools to the robotic arm for performing a variety of tasks.

To overcome some of these constraints, when fabricating larger parts the dimensions of the machine tools may need to be extended by design engineers, which adds significant additional costs to the manufacturing process. Alternatively, the part being manufactured may need to be split into sub-segments allowing more than one tool to operate on the piece, or sub-segments may be manufactured separately and combined to form the final product. This process again requires design engineers to define sub-segments and additional processing steps and tools to perform the operations. This too adds additional costs to manufacturing. Many manufacturing industries including maritime, automotive, aerospace, and electronics recognize a need for robots that may be deployed to manufacture large objects in unconstrained spaces. Accordingly, improved systems are desired to address the shortcomings of the present state of the art.

### SUMMARY

According to certain aspects described herein, an agile manufacturing platform for manufacture of an object includes a substantially planar body and a plurality of articulated legs and/or wheels coupled to the planar body, a computer processor also supported by the planar body, an articulated robotic arm rotatably mounted to the planar body, the articulate robotic arm comprising at least one articulated joint to provide at least 3 degrees of freedom relative to the planar body; and a machine tool coupled to the articulated robotic arm. The agile manufacturing platform may also include a roller element coupled to each of at least one of the articulated legs configured to allow the agile manufacturing platform to roll across an operating surface where the operating surface is conducive to traversal by rolling as opposed to walking. The machining tool may be an additive manufacturing tool. The additive manufacturing tool may, for example, be an extruder, welding torch to be used with materials including but not limited to polymers, plastics, composites, or metals. The agile manufacturing platform may further include a communication module in communication with the computer processor and configured to receive manufacturing tasks assigned to the agile manufacturing platform from a distributed database network. The communication module may be configured to transmit to the distributed database network, state information relating to a manufacturing task assigned to the agile manufacturing platform. In some embodiments, the agile manufacturing platform of further comprises a vision system supported by the planar body; the vision system may include a camera configured to capture images of the surroundings of the agile manufacturing platform and/or a laser scanner for determining physical aspects of objects in a field of vision of the agile manufacturing platform. The vision system may communicate with the computer processor and be configured to establish an awareness of the agile manufacturing platform within its operational environment. The awareness of the agile manufacturing platform within its operation environment may include knowledge of the agile manufacturing platform relative to at least one other agile manufacturing platform.

In aspects of embodiments described herein, a collaborative manufacturing system includes a collaborative control system comprising a computer processor configured to receive a computer aided design (CAD) of an object to be manufactured and to output a manufacturing procedure for manufacturing the object. A cloud network in communication with the collaborative control system is configured to store information relating to the manufacturing procedure created by the collaborative control system. The system also includes a plurality of mobile agile manufacturing platforms, each agile manufacturing platform in communication with the cloud network, and configured to receive information relating to the manufacture of the object in the form of manufacturing tasks assigned to each of the plurality of mobile agile manufacturing platforms, and wherein each agile manufacturing platform includes a communication module for transmitting state information about the state of the manufacturing task assigned to an corresponding agile manufacturing platform, which exchange with other or take over autonomously the assigned tasks based on their priority and platform's status. The state information is stored in the cloud network.

The collaborative control system includes a computer processor, a CAD module for analysis of tasks related to CAD, a computer aided engineering (CAE) module for analysis of tasks relating to CAE, and a computer aided manufacturing (CAM) module for analysis of tasks relating to CAM.

The collaborative manufacturing system may be configured to define a plurality of tasks in the manufacturing procedure, each task being associated with a corresponding one of the plurality of agile manufacturing platforms. The cloud network may include a distributed database storage network. Each of the agile manufacturing platforms may include a system of articulated legs for mobility and at least one articulated robotic arm for performing manufacturing tasks. The platforms further include a communications module for communication information relating to a state of a manufacturing task assigned to the corresponding agile manufacturing platform to the cloud network for storage in a distributed database storage network within the cloud network. The computer processor of the collaborative control system may be configured to receive the information relating to the state of a manufacturing task for each of the plurality of agile manufacturing platforms from the cloud network, re-analyze the manufacturing procedure based on the updated state information and define a new set of manufacturing tasks in an updated manufacturing procedure based on the re-analysis, replanning, or rescheduling.

According to other aspects, a method for collaborative manufacture of an object includes in a computer processor of a collaborative control system, a computer aided design (CAD) design representative of an object to be manufactured, in the computer processor of the collaborative control system, performing analysis based on CAD, computer aided engineering (CAE) and computer aided manufacturing (CAM), generating a manufacturing procedure comprising a plurality of manufacturing tasks, assigning each of the plurality of manufacturing tasks to one of a plurality of agile manufacturing platforms communicating the plurality of manufacturing tasks to a distributed database network, receiving updated state information relating to the current state of the plurality of manufacturing tasks, re-analyzing the updated state information based on CAD, CAE and CAM, and redefining and reassigning a plurality of updated manufacturing tasks based on the reanalysis, replanning, or rescheduling.

Additionally, the computer processor may receive information from a first agile manufacturing platform representative of a condition that the first agile manufacturing platform is going offline, and of a current state of a first manufacturing task assigned to the first agile manufacturing platform, reassign the balance of the manufacturing task assigned to the first agile manufacturing platform to a second agile manufacturing platform and communicate via the distributed database network, the reassigned balance of the first manufacturing task to the second agile manufacturing platform. In addition, the tasks can be assigned from a central computer system to multiple agile manufacturing platform or the agile manufacturing platform's computer system would pick the next tasks with or without human intervention, The plurality of manufacturing tasks may be divided at least in part on a plurality of vertical blocks, wherein each vertical block representing a discretized part of the object to be manufactured.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 is an illustration of an industrial robot arm.
FIG. 2 is an illustration of a parallel kinematic manipulator.
FIG. 3 is an illustration of aspects of an agile manufacturing platform according to an embodiment of the present disclosure.
FIG. 4A is a front elevation view of aspects of an embodiment of an agile manufacturing platform according to embodiments of the present disclosure.
FIG. 4B is an isometric view of aspects of an embodiment of an agile manufacturing platform according to the embodiment of FIG. 4A.
FIG. 4C is an isometric view of aspects of an embodiment of an agile manufacturing platform according to the embodiment of FIG. 4A.
FIG. 4D is a top view of aspects of an embodiment of an agile manufacturing platform according to embodiments of the embodiment of FIG. 4A.
FIG. 4E is a side elevation view of aspects of an embodiment of an agile manufacturing platform according to embodiments of the embodiment of FIG. 4A.
FIG. 5 is a diagram of a collaborative manufacturing system according to aspects of embodiments of the present disclosure.
FIG. 5A is an isometric view of a manufacturing area including industrial robots that is configurable for use with the collaborative manufacturing system of FIG. 5.
FIG. 6 is diagram depicting vertical segmentation and discretization of a manufactural object according to aspects of embodiments of the present disclosure.
FIG. 7 is a diagram of computer system on which a collaborative manufacturing control system may be implemented according to aspects of embodiments of the present disclosure.
FIG. 8 is a process flow diagram for a method of collaborative manufacturing using agile manufacturing platforms according to aspects of embodiments of the present disclosure.

### DETAILED DESCRIPTION

Research efforts in mobile manufacturing platforms include the use of structures and controls relating to parallel kinematic manipulators (PKM). PKMs provide greater stiffness and motion dynamics for systems having a lack of operational space. In addition, a mobile PKM requires installation of one or more fixtures and setup for fabrication with respect to a shop floor or work piece. Additional considerations relating to the PKM include the preparation of the machine tools during the installation phase. These considerations often require floor preparation, leveling, and calibration of the machine tool. With regard to fabrication setup other considerations, including cleaning, tool setup and offsets, fixture setups and their offsets, and coolant adjustments must be addressed. These constraints make the use of PKM-based arrangements impracticable for manufacturing in austere environments.

FIG. 2 provides an illustration of a conventional PKM arrangement. A base 205 supports a number of adjustable (e.g., telescopic) legs 203. A platform 201 is supported by the adjustable legs 203. In the arrangement of FIG. 2, three legs are provided, supporting platform 201 at three contact points. The three contact points define a plane 207 associated with and supporting platform 201. Regardless of the level of base 205, adjustable legs 203 may be selectively lengthened or shortened in order to maintain a desired reference plane 207 for platform 201. The desired reference plane 207 may be level with respect to the work floor, or alternatively, may be maintained at a relative position to a work piece. For example, in a robotic device, platform 201 may support a robotic arm equipped with a machine tool. The tool may be controlled with respect to a work region by controlling the orientation of reference plane 207, and thus platform 201 relative to the work object.

According to aspects of embodiments described herein, a solution is provided which is simple and utilitarian, providing a system which is reactive or non-reactive. For applications involving a single agile manufacturing platform embodied as a robot, a computer processor associated with the robot executes software instructions to complete the robot's tasks, while taking into consideration pre-computed joint angles to achieve precise agility control of the robot. In other applications, multiple robots may be implemented in a collaborative fashion to manufacture a particular object. In a multi-robot scenario. A number of robot tasks are assigned and distributed to specific robots having the same aspects of agility control discussed above. In this assignment, the robot's skills (e.g. drilling, machining, welding, additive manufacturing etc.) as well as internal algorithms play a critical role which would be accomplished through a computation from central computer or robot's on-board computer, with or without human intervention -autonomously. Notwithstanding environments where traction errors are unavoidable and minimized by the control algorithms with sensory feedback (e.g. visual, inertial, vibration, acoustic, laser, electrical etc.), agile manufacturing platforms according to embodiments of this disclosure allow fabrication of any sized object in an unlimited and unrestrained workspace.

According to one embodiment, an agile manufacturing platform comprises a robot having a set of articulated legs and at least one articulated robot arm. The legs and robotic arm are coupled to a body of the robot. The robot may include increased friction regions associated with tips of the legs to enhance traction across an unlimited workspace. Increased friction may be achieved by the placement of a resilient material on portions of the articulated legs. For example, rubber may be attached to tips of the articulated legs to increase friction or attachments like spikes would enhance the stability of the leg's motion.

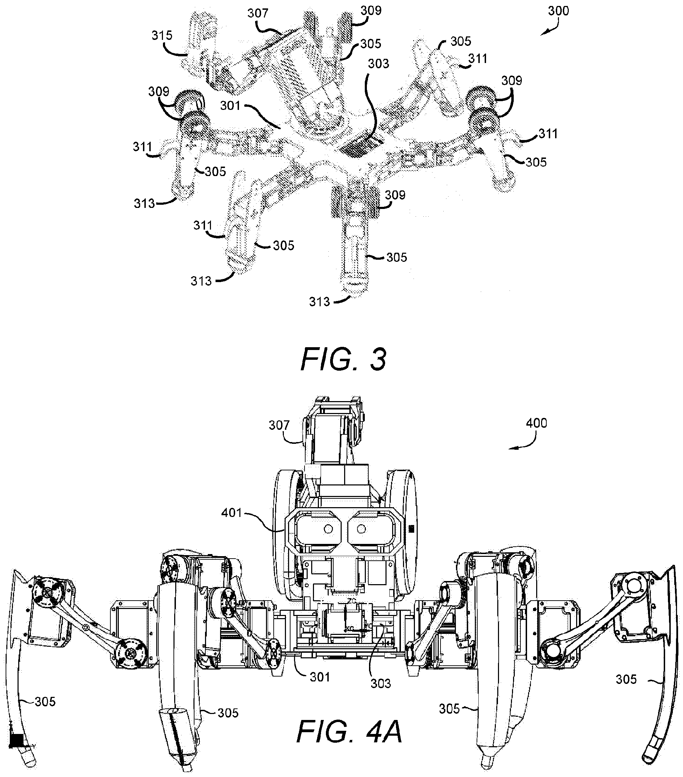

Individual feedback (e.g., position, velocity and torque) provides control of actuators, in combination with a sensor fusion (e.g. inertial measurements units (gyroscopes, inclinometers, accelerometers - IMU), torque sensors, force sensors, vibration sensors, tactile sensors, laser scanners (2D or 3D), depth cameras, acoustic sensors, thermal cameras, magnetic or electric field sensors) on the robot's eye, body, or articulated arm. A computer, comprising a computer processor in wired and wireless communication with other computers and has memory, storing device. The computer executes the instructions based on the internal algorithms and the results of these computations provide real-time control as well as general purpose input/output (GPIO) functionality. The articulated legs are distributed in a substantially circular configuration circumferentially about the body to provide increased omni-directional stability of gaits. In another embodiment, a rectangular or elliptical leg distribution would be useful where the robot's bi-directional stability (forward and backwards) is important. Similar to PKMs, the distributed legs assures an equal share of the payload in between legs. In this respect, the number of legs is a decision based on the payload, stability, and energy consumption. FIG. 3 is an illustration of one embodiment of an agile manufacturing platform robot 300 according to an exemplary embodiment of the disclosure. Robot 300 includes a body 301 that supports a plurality of articulated legs 305. In the embodiment shown in FIG. 3, the robot 300 includes six articulated legs 305. However, more or fewer legs could be used. Each articulated leg 305 includes a foot 313 that comes into contact with a surface that the robot 300 is situated on. Each foot 313 may include a resilient pad at the surface which provides friction between the foot 313 and the supporting surface.

The articulated legs 305 support the body 301 and maintain the body 301 in its position relative to the operating surface of the robot 300. Body 301 may support other components of the robot 300 including a computer processor 303 and an articulated robot arm 307. Articulated robot arm 307 may include a number of rotational, hinged or translation joints allowing multiple degrees of freedom enabling movement and positioning of the articulated robotic arm 307. The articulated robotic arm 307 may be coupled to a machine tool 315. Machine tool 315 may include tools for gripping, lifting, positioning, or measuring. Further, machine tool 315 may be implemented using an additive or subtractive manufacturing tool. For example, machine tool 315 may include an extruder for additive manufacturing, or a drill or grinder tool for subtractive manufacturing.

At least some of the articulated legs 305 may include a roller element 309. In an embodiment including roller elements 305, the articulated legs 305 may be operated to attain a position in which the foot 313 is elevated until the roller element 309 comes into contact with the operating surface. Legs 305 having roller elements 309 in contact with the operating surface may include drives or motors for rotating the roller elements 309. The articulated legs 305 may be rotated such that each roller element 309 is aligned with each other roller element 309 and the robot 300 is capable of translational movement across the operating surface using the roller elements 309. This provides increased locomotive velocity on surfaces that are conducive to rolling, as compared to uneven terrain where a walking motion is more effective.

Some or all of the articulated legs 305 may be equipped with hooks 311. Hooks 311 allow the robot 300 to scale surfaces that provide purchase points for the insertion of hooks 311. In other embodiments, hooks 311 may allow a robot 300 to suspend itself from an overhead support and provide manufacturing tasks in an inverted, suspended position.

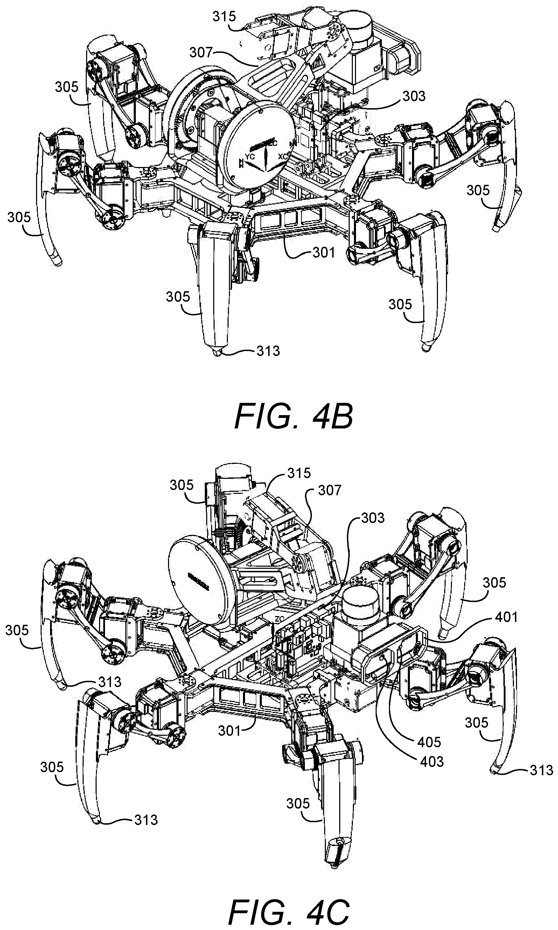

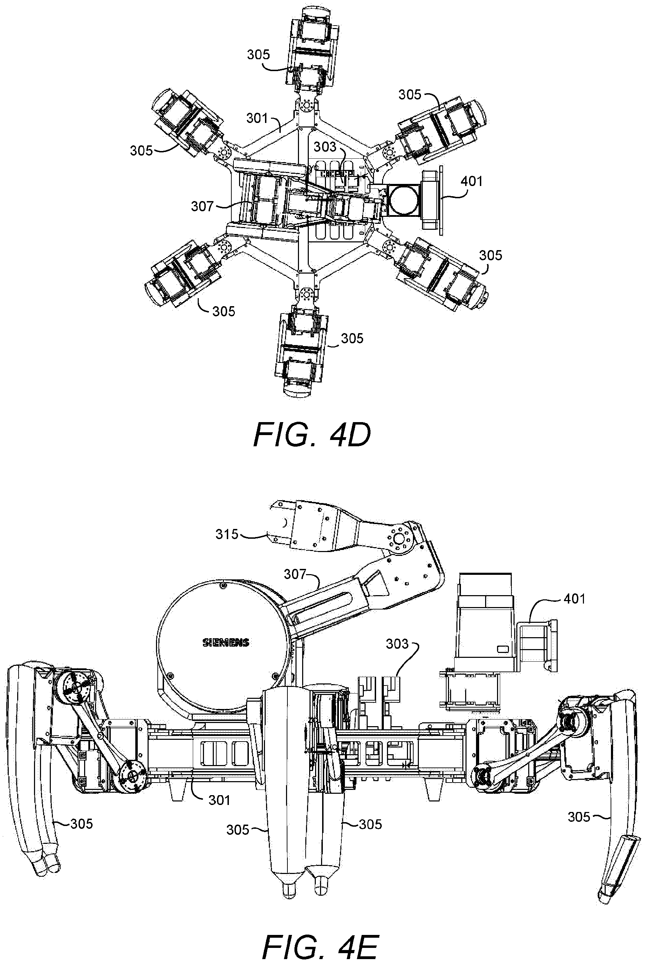

Referring to FIG's. 4A through FIG. 4E, a depiction of another embodiment of an agile manufacturing platform robot 400 is shown. Robot 400 is similar in some respects to robot 300 of FIG. 3, including articulated legs 305, computer processor 303, body 301 and robot arm 307 with machine tool 315. In addition, robot 400 includes a vision system (e.g., 2D or 3D Laser Scanners, Depth Cameras, Acoustic Sensors, Magnetic, Electrical, Thermal Sensors etc.) 401. Vision system is supported by body 301 and includes components allowing robot 400 to sense its surroundings. In embodiments, vision system 401 includes optical components including a 3-dimensional camera 403 and a laser scanner 405. Other optical or radio frequency components may also be used. For example, infrared sensors, laser-based light detection and ranging (LIDAR) or radio frequency (RF) detection and ranging systems (e.g., RADAR) may be used.

Equipped with vision system 401, robot 400 is able to detect and recognize objects and landmarks within its operating environment. Detection or recognition of other robots, an object being manufactured, or surrounding objects or obstacles may be recognized. With this knowledge, computer processor 101 may be configured to allow robot 400 to autonomously avoid obstacles, and maintain awareness of the current state of a manufacturing task, such as the level of completion of the manufacturing task. Information relating to the current state of manufacturing tasks may be communicated by the robot's processor 301 to a distributed data storage system and used by collaborative systems to manage a manufacturing project utilizing a plurality of agile manufacturing platforms as will be described in greater detail below.

Each robot 300, 400 has two modes of operation. The first mode of operation enables the mobility of the robot 300, 400 in cases where the fabrication volume needs to relocate. The second mode of operation involves the robot's articulated arm acting as a machine tool 315 while the axisymmetric legs 305 hold the robot's body 301 in a fixed position at a preprogrammed height. In this way, the robot's body 301 serves as a stabilized platform supporting the articulated robot arm 307 and associated machine tool 315.

To provide required functionality, pre-computation of the robot's tasks and feedback control of each robot 300, 400 is performed. A single robot or multiple robots each possess required information relating to tasks allocated to the robot as a result of the pre-computations. Moreover, feedback control guarantees stability of each robot and the viability of the tasks during the execution via the combination of the sensor fusion. Actuator encoders, 3 degree of freedom (DOF) accelerometer, 3DOF gyroscope, and 3DOF magnetometer may be useful in providing information relating to manufacture in scenarios where the robots are not affected by external disturbances.

However, this raises some questions for use of the robots in an austere environment. As described above with respect to FIG. 4A through FIG. 4E, some embodiments include a vision system 401 to create a reactive version of the agile manufacturing platform robot 400. The vision system 400 includes components coupled to the robot's body 301. The vision system 401 provides sensors or components 403, 405 which allow the robot to be aware of its surroundings. For example, a camera may be provided which captures images of a field of view of the robot. Computer processors may process the captured images to identify structures or objects in the robot's field of vision. Objects may include obstacles which the robot must negotiate in a first mode of operation (e.g. mobility). Alternatively, objects in the robot's field of vision may include work pieces or areas designated as workspaces for additive manufacturing. The computer processor may analyze images to determine classifications of objects captured by the robot's vision system and provide control signals to other components of the robot. For example, upon classification of an object as an obstacle, the computer processor may execute computer instructions for navigating around the obstacle. Control signals may be generated by the computer processor and communicated to actuators of the robot's articulated legs. The control signals are operative to activate the actuators to move the articulated segments of the legs to cause the robot to move in a direction that avoids the obstacle and redirect the robot toward the location of the task assigned to the robot for completion. The robot's computer system may further include, either additionally or in the alternative, a laser-based scanning sensor for identifying and ranging objects within the field of operation of the laser scanner. Cameras and laser scanners are merely examples of components that may be used alone or in combination to provide a visions system to the agile manufacturing platform. Other components may be contemplated by one of skill in the art which may provide equivalent functionality. These other components may be used in other embodiments of the agile manufacturing platform and fall within the scope and spirit of this disclosure.

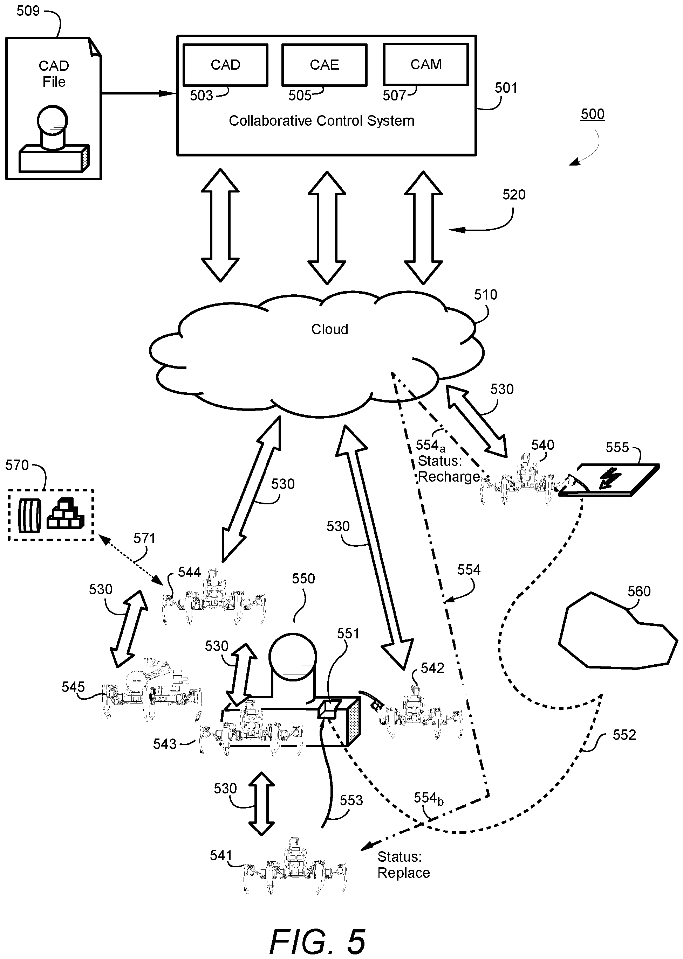

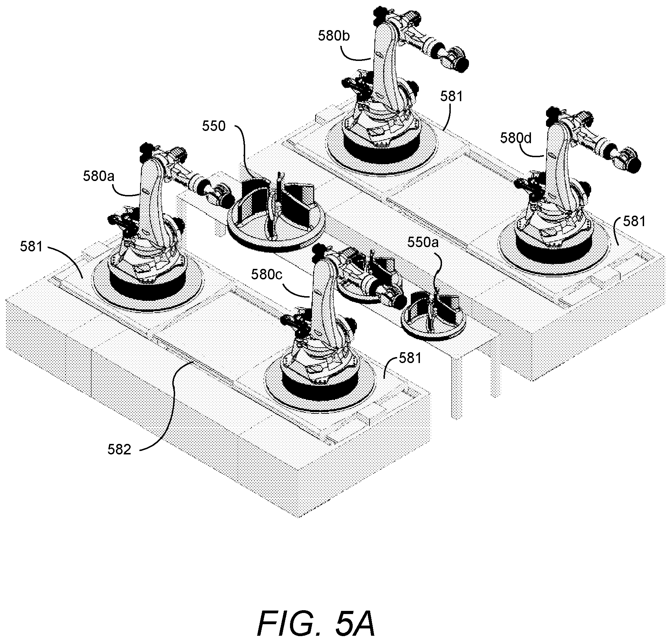

FIG. 5 is an illustration of a collaborative agile manufacturing system 500 according to aspects of the present disclosure. The system 500 includes a collaborative control system 501. The collaborative control system 501 includes, but is not limited to a computer processor in communication with computer memory for performing various tasks and calculations associated with the collaborative agile manufacturing system 500. Tasks and calculations performed by the collaborative control system 501 may include tasks and/or calculations relating to Computer Aided Drafting (CAD), Computer-Aided Engineering (CAE) and/or Computer Aided Manufacturing (CAM).

CAD allows a designer to produce three-dimensional or two-dimensional models of a product or object. CAD provides geometric shape creation, manipulation and analysis. The collaborative control system 501 may be configured to allow open CAD development. Open systems allow for integration between development disciplines allowing designers having skills in different disciplines to provide input to the product design. The collaborative control system 501 receives inputs representing the varying design considerations and integrates and analyzes the inputs to provide an optimized design.

CAE may be used to assist engineers in the analysis of robustness and performance level for components and assemblies used in a design. Thus, CAE systems provide design teams with information valuable for decision making. CAE is valuable in many industries today, including automotive, aviation, space and shipbuilding. While these fields provide some examples of industries benefitting from CAE, the benefits are not limited to these fields. One of skill in the art could easily conceive of many other fields of endeavor that would benefit from the application of computer aided techniques in design, engineering and manufacturing.

CAM software within the collaborative control system 501 may be configured to provide solutions to machine tool programming, post-processing and machining simulation. Machine tools may include tools directed to additive manufacturing, in which a part or assembly is manufactured by sequentially adding layers of material to form a part or object. In some applications, the collaborative control system 501 may be configured to use advanced features such as feature-based machining (FBM). In FBM, a manufacturing program may automatically create optimized machine programs (e.g. CNC-based programs) by reading product and manufacturing information (PMI) that is attached to a CAD design model. The FBM software can recognize a wide range of feature types and automatically generate manufacturing codes to create an object according to the CAD model provided to the CAM system.

Referring again to FIG. 5, the collaborative agile manufacturing system 500 includes one or more agile manufacturing platforms 540-545. Each agile manufacturing platform 540-545 is a self-aware, mobile platform configured for autonomous completion of assigned tasks. In addition, the agile manufacturing platform 540-545 may be configured to autonomously make other associated decisions, such as obstacle avoidance, workpiece positioning, collaborative production, and recharging or replenishment of power, communications and/or building materials, by way of example.

A work area may be considered to be the area which will accommodate the constructed object 550 as well as the surrounding area, which may include the collaborative control system 501, raw materials 570, and other support devices such as a charging station 555, in order to provide uninterrupted service from agile manufacturing platform(s) 540-545.

To begin manufacture, a CAD design 509 is input to the collaborative control system 501. The received CAD design 509 may act as one input from a number of different designers across multiple disciplines. The collaborative control system 501 includes a CAD component 503 which may analyze one or more input designs and combine the designs into a final CAD design. The final CAD design may account for certain engineering considerations. Engineering considerations may be provided by the collaborative control system by way of a CAE component 505. The final CAD design, based in part on the CAE information and processing, is processed further by a CAM component 507 which determines information relating to manufacture of the desired design object 550. The collaborative control system 501 is further in communication with a remote computing platform, for example, a cloud computing network 510 via one or more communication channels 520. The information in communication channels 520 is bi-directional, meaning that information relating to manufacturing is provided to the cloud 510 from the collaborative control system 501, and information (e.g., feedback information) is provided from the cloud 510 back to the collaborative control system 501. Information from the cloud may include information relating to the current state of various components of the manufacturing process, including but not limited to, current manufacture progress, the number of current manufacturing tasks assigned as well as the present state of these tasks, and the amount of raw materials available. Other information, as will be discussed in greater detail below, may be provided from the manufacturing site to the cloud 510 and communicated on to the collaborative control system 501. The information received from the cloud 510 by the collaborative control system 501 allows the collaborative control system 501 to perform further processing on the manufacturing process plan for manufacture of the desired object 550. For example, state changes in the manufacturing site may indicate that changes in the engineering aspects or manufacturing process may be exploited for more efficient manufacture of object 550. If so, the manufacturing process plan may be updated by the collaborative control system 501 and communicated to the manufacturing site via the cloud 510.

One or more agile manufacturing platforms 540-545, (or simply platforms), are configured as mobile, self-aware manufacturing units which include tools required for performing various manufacturing tasks. For example, one or more platforms may include an additive manufacturing tool for performing additive manufacturing tasks such as deposition of material layers to construct a desired object 550. An additive manufacturing tool may include an extruder attached to an articulated robotic arm. The platform may provide locomotion via a system of articulated legs. Equipped in this way, each platform may locate and position itself relative to the work piece being manufactured. Once positioned such that the robotic arm coupled to the extruder is within reach of the object 550 being manufactured, a computer processor on board the platform may provide control signals based on signals received from sensors positioned onboard the platform. The control signals are communicated to control components such as motors or servos, and may further instruct the additive manufacturing tool (e.g., an extruder) to deposit material at a specified workpiece location as directed by manufacturing procedure developed by the collaborative control system 501.

Referring back to FIG. 5, a plurality of manufacturing platforms 540-545 may be implemented to construct an object 550. Each platform is in communication with the collaborative control system 501 via the cloud network 510. Each platform may receive information including tasks assigned to that platform. A task may include a portion of the overall manufacturing procedure which has been developed and disseminated by the collaborative control system 501. Each platform is self-aware of its location relative to the object being manufactured, as well as its location relative to other manufacturing platforms on the worksite. Each platform may autonomously determine a best manner for completing its assigned tasks, based on the task to be performed, the platform's current location relative to raw materials 570 or the work object 550, and based on the current state of the other platforms, including their locations as wells as the present state of the tasks being performed by the other platforms and other factors. As a result of this self-awareness, any given platform may be utilized based on the present status of the production procedure. Some exemplary exploitation of the mobile platforms will now be described in detail with reference to the system of FIG. 5.

Agile manufacturing platform 540 illustrates a scenario in which an agile manufacturing platform 540 is performing additive manufacturing on an object 550 at region 551 when the platform 540 determines through sensors that its power supply is becoming depleted and will need renewal or recharging. In this scenario, platform 540 transmits a signal via communication channel 530 to the cloud 510 which provides the signal to the collaborative control system 501. The signal transmitted by platform 540 may include data indicative of the current task being performed by platform 540, the state of an assigned task when platform 540 stopped progress of the task, and an indication that platform 540 is leaving the vicinity of the work piece 550 to relocate to charging station 555. The path that platform 540 follows to leave work region 551 to arrive at charging station 555 is indicated by the dotted line 552. Platform 540 proceeds on a calculated shortest path to charging station 555. En route to charging station 555, platform 540 encounters an obstacle 560. The vision system of platform 540 detects obstacle 560 through optical sensors which may include a 3-D camera and/or laser scanner. Platform 540 determines the location and range to obstacle 560 and scans the vicinity of obstacle 560 for a clear path for traversal. Platform 540 recalculates a new path to charging station 555 and continues moving toward charging station 555 until platform 540 reaches its destination and docks into charging station 555 for recharging.

Meanwhile, prior to leaving the worksite region 551, platform 540 communicates to the collaborative control system 501 via signal 554ₐ, that platform 540 has partially completed the manufacturing task associated with manufacturing region 551. Collaborative control system 501 determines through data stored in the cloud 510 that a second agile manufacturing platform 541 is in close proximity to manufacturing region 551, and that presently, platform 541 is not involved in a manufacturing task. Collaborative control system 501 recalculates the manufacturing procedure, defining a new task that represents the completion of manufacture for region 551. Collaborative control system 501 communicates via cloud 510 to platform 541 a message 554_{b} to assign the new task to platform 541. Platform 541 calculates a path 553 to region 551 and begins moving platform 541 into position to complete the task started by platform 540. Platform 541 will transmit periodic status signals to the cloud 510 reflecting platform 541's progress and location in completing the newly assigned task. Collaborative control system 501 will receive the state updates regarding platform 541 and may use the received information for further analysis of the manufacturing procedure via the CAD 503, CAE 505 and CAM 507 components of the collaborative control system 501.

Agile manufacturing platform 542 is illustrative of the mobility provided by agile manufacturing platform 542 according to embodiments of this disclosure. Platform 542 may receive a manufacturing task from collaborative control system 501. The manufacturing task assigned to platform 542 may involve the additive manufacture of the cylindrical portion of object 550. While approaching object 550, platform 542 determines through its vision system that it is blocked by the rectangular base of object 550 which has already been constructed. The on-board processor calculates a series of movements among platform 542's articulated legs which allow platform 542 to climb atop the rectangular base to gain access to the cylindrical portion of object 550. Utilizing properties of parallel kinematic manipulators, platform 542 may calculate coordinated movements between individual legs in its set of articulated legs such that the body of platform 542 remains level relative to the workplace. For example, the body of platform 542 may support an additive manufacturing tool. By maintaining the supporting body in a stable position relative to an operating plane and relative to the workpiece, the additive manufacturing tool may be positioned and operated to produce the desired structure 550.

Agile manufacturing platform 543 illustrates a platform 543 that is in process of performing an assigned manufacturing task. Platform 543 receives a manufacturing task via cloud 510 from the collaborative control system 501. The manufacturing task may define a specific task relating to the manufacture of object 550. For example, platform 543 may receive an instruction to perform an additive manufacturing action to deposit a material to construct the rectangular base of object 550. Platform 543 includes a processor that calculates appropriate movements for each articulated leg of platform 543 in order to move platform 543 from an initial position to a final position that allows platform 543 to be in range to reach object 550 with platform's 543 articulated robotic arm. The articulated robotic arm of platform 543 may be equipped with an additive manufacturing tool, for example an extruder, for depositing material to form a geometric form according to the CAD design and manufacturing procedure determined by collaborative control system 501.

Agile manufacturing platform 544 illustrates another aspect of the collaborative manufacturing system 500. During manufacture of object 550, raw materials 570 are used and converted to a form consistent with the design and manufacturing process devised by collaborative control system 501 to make object 550. During the manufacture procedure, the manufacturing platforms may perform manufacturing tasks that exhaust the supply of raw materials that can be carried by a particular platform. In this case, the affected platform may transmit a status message via communication channel 530 to the cloud 510. The message contains data indicating that the platform is running out of raw materials and must soon stop its manufacturing task. The message may include additional information relating to the current state of the manufacturing task so that the remainder of the task may be reassigned to another platform of the amount of additional raw material 570 required to complete the task may be determined. The collaborative control system 501 receives the information contained in the message and performs analysis to determine the best way to replenish the raw material supply in order to continue the manufacturing task threatened by the depleted platform. Having knowledge of the location of the raw materials 570 and the location of each agile manufacturing platform 540-545, the collaborative control system 501 determines a platform 544 which is closest to the raw materials 570, making the materials most accessible to platform 544. A command is issued by the collaborative control system 501 to the cloud 510 and relayed to agile manufacturing platform 544 to move to the raw material supply 570 and obtain additional raw materials. Platform 544 may further receive a message containing additional manufacturing instructions. For example, platform 544 may receive a manufacturing instruction to proceed to the location of the depleted platform and complete the remaining portion of an original task assigned to the depleted platform. In the alternative, platform 544 may be instructed to obtain additional raw materials and transport them to the platform which is becoming depleted and restock that platform with additional raw materials. In this way the originally assigned manufacturing task may be completed with the aid of platform 544.

Agile manufacturing platform 545 is illustrative on another aspect of a collaborative manufacturing system 500 according to embodiments of this disclosure. Agile manufacturing platform 545 is positioned within the worksite for manufacturing object 550. Platform 545 is configured similarly to other manufacturing platforms of the collaborative manufacturing system 500, including a set of articulated legs for mobility and positioning, a processor for autonomously controlling functions of platform 545, a vision system for environmental awareness, and an articulated robotic arm. However, instead of possessing an additive manufacturing tool associated with its articulated robotic arm, platform 545 includes a different robotic tool. For example, platform 545 may include an articulated robotic arm that is equipped with a mechanical gripper. As manufacturing progresses, collaborative control system 501 may identify certain ancillary tasks that do not directly involve manufacturing but may indirectly facilitate manufacturing. For example, an agile manufacturing platform may encounter a condition that it becomes overturned and can no longer navigate because its legs are not in contact with the ground. In this scenario, platform 545 may be sent an instruction by the collaborative control system 501 to proceed to the location of the disabled platform. Upon arrival, platform 545 may use its robotic tool (e.g., a gripper) to engage the disabled platform and use its articulated robotic arm to upright the disabled platform. Once the disabled platform is restored, platform 545 may transmit a message to collaborative control system 545 that its task is complete and the disabled platform is restored. Additionally, the reestablished platform transmits a status message to the cloud 510 and collaborative control system 501 indicating that it is back online and functional, including state information of any manufacturing tasks that the platform is associated with.

The collaborative manufacturing system 500 of FIG. 5 provides a complete, autonomous system for manufacture. Receiving only a CAD design, the collaborative control system performs CAD, CAE and CAM functions to create a manufacturing procedure for making an object 550 according to the in CAD design 509. No further intervention is required. Based on the available resources, the collaborative control system 501 produces a manufacturing plan to most effectively utilize all manufacturing platforms at its disposal. The mobile manufacturing platforms are self-aware allowing them to navigate the worksite and access portions of the workpiece, avoiding obstacles 560 and other platforms. The manufacturing platforms work in an organized collaborative fashion. Each platform may be assigned manufacturing tasks that produce a portion of the overall manufacturing procedure. When combined, the set of completed tasks are performed by a plurality of platforms resulting in the manufacture of the desired object 550. Because the manufacture is a team effort, there is no need for each manufacturing platform to be of a certain size relative to the object 550 being manufactured. Small objects may be capable of being manufactured by a single platform. However, there is no limit to the size of an object that can be manufactured due to the mobility and collaborative nature of the team of manufacturing platforms. Further, the collaborative manufacturing system 500 is not limited in terms of a given workspace. The mobile manufacturing platforms are not limited to a factory floor, and may be deployed in austere environments with little starting infrastructure. In some embodiments, agile manufacturing platforms may be capable of manufacturing by additive manufacturing techniques, other agile manufacturing platforms. Once constructed and brought online, the newly manufactured platforms may perform manufacturing tasks including direct or ancillary manufacturing tasks, as well as other tasks related to construction of additional platforms.

In certain other aspects of embodiments described herein, a partially constructed agile manufacturing platform may be capable of partially constructing itself. For example, collaborative control system 501 may determine that an additional manufacturing platform may be needed. A manufacturing task is transmitted to an existing manufacturing platform to begin manufacture of the additional manufacturing platform. According to an embodiment, the task includes fabricating the body, processor and articulated robotic arm coupled to the body. At this stage of manufacture, the manufacturing platform that is under construction may become self-aware and begin fabrication of its remaining parts. For example, the processor of the partially fabricated platform may provide control signals which cause the articulated robotic arm and attached additive manufacturing tool to begin additive manufacturing of the articulated legs and vision system of the platform under construction. When fabrication is complete, the newly constructed platform may communicate its availability for additional manufacturing tasks to the collaborative control system 501.

FIG. 5A is an isometric view of a manufacturing area including industrial robots 580 mounted on moveable platforms 581. The collaborative manufacturing system 500 of FIG. 5 is configurable to control a manufacturing architecture as shown in FIG. 5A. The collaborative control system 501 may provide manufacturing tasks to the cloud network. Manufacturing tasks may be assigned to one of a plurality of industrial robots 580a, 580b, 580c, 580d. The robot 580 includes a communications module for receiving manufacturing data from the cloud network and for sending back feedback information relating to the present state of a manufacturing task being performed by the corresponding robot 580. An object of manufacture 550 is created in a work area that is proximal to one or more of the industrial robots 580. One or more of the industrial robots may be assigned manufacturing tasks directed at fabrications of portions of object 550. The work area may include space for manufacture of additional components or ports 550a. The plurality of robots 580 may simultaneously work on multiple objects allowing for parallel manufacturing. The robots 580 may be positioned by the movement of platform 581 associated with a corresponding robot 580. The moveable platform 581 may be supported by a linear rail system 582 which allows linear movement of the platforms 581 and supported robots 580 parallel to the work area. In other embodiments, the robots 580 may be supported on a mobile moveable platform allowing relative movement with respect to the work are in both a parallel and normal direction. The moveable platform 581 extends the range of the industrial robot 580 beyond the limits imposed by the dexterity of the articulated robotic arm.

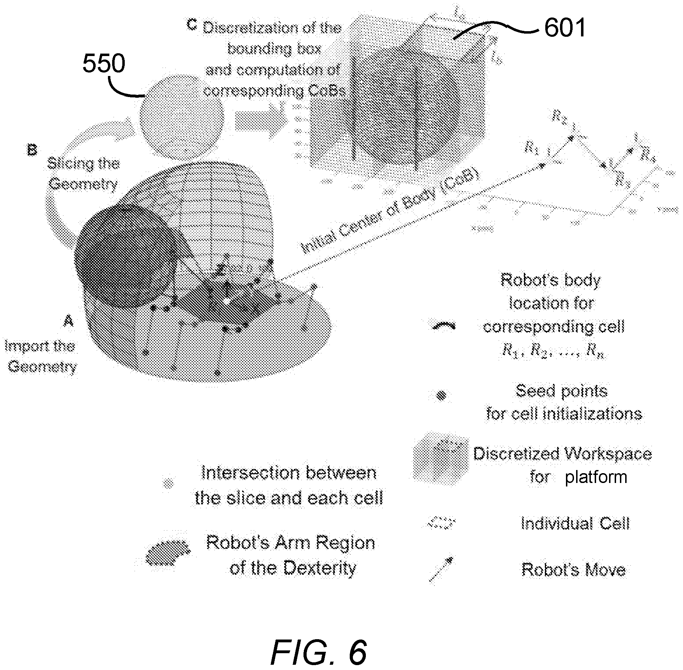

FIG. 6 illustrates the partitioning of a manufactural object 550 into vertical blocks and discrete cells to enable collaborative manufacturing according to embodiments of this disclosure. The manufactural object 550 is designed and engineered by a collaborative control system 501 as described above with regard to FIG. 5. A processor associated with the collaborative control system 501 may then take the object 550 and divide the object into vertical layers, by slicing the geometry of the object 550 as shown in step B. The vertical layers are divided into cells, defining a seed point to initialize each cell. Precomputation of manufacturing tasks relating to each cell is performed based in part of the present location of the manufacturing platforms as determined by the robot's center of body (CoB). The robot's region of arm dexterity and CoB allows the control processor to calculate the robot's movements in order to complete the manufacturing tasks associated with one or more cells. The cells define discrete portions of the object 550 constrained by a bounding box around the object 550. By partitioning the manufactural object 550 into vertical layers, the collaborative control system may develop a manufacturing procedure and define manufacturing tasks that may be divided among multiple manufacturing platforms. Furthermore, multiple agile manufacturing platforms may perform their assigned manufacturing tasks simultaneously, with the knowledge of the present state of the manufacturing process and the location of the other platforms.

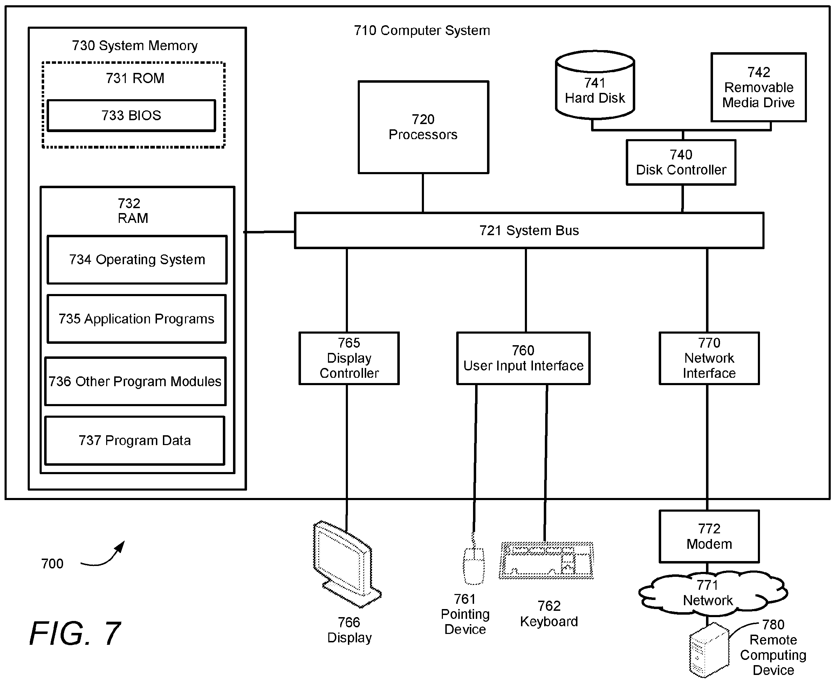

FIG. 7 illustrates an exemplary computing environment 700 within which embodiments of the invention may be implemented. Computers and computing environments, such as computer system 710 and computing environment 700, are known to those of skill in the art and thus are described briefly here.

As shown in FIG. 7, the computer system 710 may include a communication mechanism such as a system bus 721 or other communication mechanism for communicating information within the computer system 710. The computer system 710 further includes one or more processors 720 coupled with the system bus 721 for processing the information.

The processors 720 may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Continuing with reference to FIG. 7, the computer system 710 also includes a system memory 730 coupled to the system bus 721 for storing information and instructions to be executed by processors 720. The system memory 730 may include computer readable storage media in the form of volatile and/or nonvolatile memory, such as read only memory (ROM) 731 and/or random access memory (RAM) 732. The RAM 732 may include other dynamic storage device(s) (e.g., dynamic RAM, static RAM, and synchronous DRAM). The ROM 731 may include other static storage device(s) (e.g., programmable ROM, erasable PROM, and electrically erasable PROM). In addition, the system memory 730 may be used for storing temporary variables or other intermediate information during the execution of instructions by the processors 720. A basic input/output system 733 (BIOS) containing the basic routines that help to transfer information between elements within computer system 710, such as during start-up, may be stored in the ROM 731. RAM 732 may contain data and/or program modules that are immediately accessible to and/or presently being operated on by the processors 720. System memory 730 may additionally include, for example, operating system 734, application programs 735, other program modules 736 and program data 737.

The computer system 710 also includes a disk controller 740 coupled to the system bus 721 to control one or more storage devices for storing information and instructions, such as a magnetic hard disk 741 and a removable media drive 742 (e.g., floppy disk drive, compact disc drive, tape drive, and/or solid state drive). Storage devices may be added to the computer system 710 using an appropriate device interface (e.g., a small computer system interface (SCSI), integrated device electronics (IDE), Universal Serial Bus (USB), or FireWire).

The computer system 710 may also include a display controller 765 coupled to the system bus 721 to control a display or monitor 766, such as a cathode ray tube (CRT) or liquid crystal display (LCD), for displaying information to a computer user. The computer system includes an input interface 760 and one or more input devices, such as a keyboard 762 and a pointing device 761, for interacting with a computer user and providing information to the processors 720. The pointing device 761, for example, may be a mouse, a light pen, a trackball, or a pointing stick for communicating direction information and command selections to the processors 720 and for controlling cursor movement on the display 766. The display 766 may provide a touch screen interface which allows input to supplement or replace the communication of direction information and command selections by the pointing device 761.

The computer system 710 may perform a portion or all of the processing steps of embodiments of the invention in response to the processors 720 executing one or more sequences of one or more instructions contained in a memory, such as the system memory 730. Such instructions may be read into the system memory 730 from another computer readable medium, such as a magnetic hard disk 741 or a removable media drive 742. The magnetic hard disk 741 may contain one or more data stores and data files used by embodiments of the present invention. Data store contents and data files may be encrypted to improve security. The processors 720 may also be employed in a multi-processing arrangement to execute the one or more sequences of instructions contained in system memory 730. In alternative embodiments, hard-wired circuitry may be used in place of or in combination with software instructions. Thus, embodiments are not limited to any specific combination of hardware circuitry and software.

As stated above, the computer system 710 may include at least one computer readable medium or memory for holding instructions programmed according to embodiments of the invention and for containing data structures, tables, records, or other data described herein. The term "computer readable medium" as used herein refers to any medium that participates in providing instructions to the processors 720 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 741 or removable media drive 742. Non-limiting examples of volatile media include dynamic memory, such as system memory 730. Non-limiting examples of transmission media include coaxial cables, copper wire, and fiber optics, including the wires that make up the system bus 721. Transmission media may also take the form of acoustic or light waves, such as those generated during radio wave and infrared data communications.

The computing environment 700 may further include the computer system 710 operating in a networked environment using logical connections to one or more remote computers, such as remote computing device 780. Remote computing device 780 may be a personal computer (laptop or desktop), a mobile device, a server, a router, a network PC, a peer device or other common network node, and typically includes many or all of the elements described above relative to computer system 710. When used in a networking environment, computer system 710 may include modem 772 for establishing communications over a network 771, such as the Internet. Modem 772 may be connected to system bus 721 via user network interface 770, or via another appropriate mechanism.

Network 771 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 710 and other computers (e.g., remote computing device 780). The network 771 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 771.

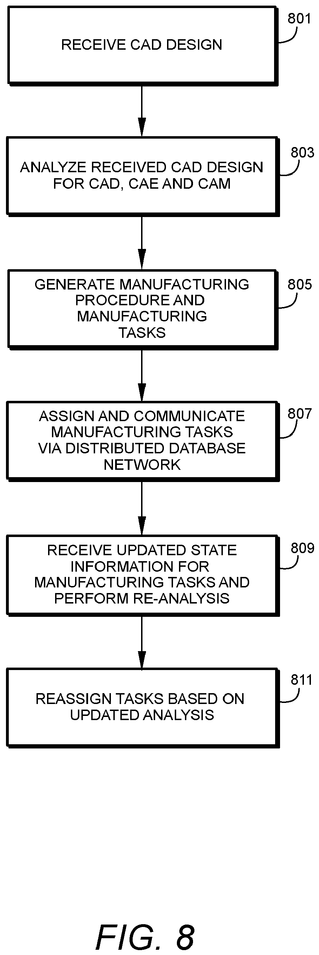

FIG. 8 is a process flow diagram for a method of collaborative manufacturing according to aspects of embodiments of this disclosure. A CAD design for an object to be manufactured is received by the collaborative manufacturing system 801. The collaborative manufacturing system includes at least one computer processor that performs analysis of the received CAD design in terms of computer aided design, computer aided engineering and computer aided manufacturing 803. Based on the analysis, the processor generates a manufacturing procedure, including the resources and steps needed to manufacturing the desired object. Manufacturing tasks are identified and associated with manufacturing resources 805. The manufacturing tasks are assigned to particular resources and communicated to the manufacturing resources via a distributed database, such as a cloud network 807. As the manufacturing resource perform their assigned task, the resources provide up-to-date state information relating to completion of the manufacturing task and the current state of the manufacturing procedure. This information is uploaded to the distributed database network and received by the collaborative manufacturing system control, which receives the current state information and performs additional re-analysis of the manufacturing project 809. The collaborative manufacturing control system may update the manufacturing procedure and re-assign manufacturing tasks based on the re-analysis.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof.

## Claims

1. A collaborative manufacturing system (500) comprising:
a collaborative control system (501) comprising a computer processor configured to receive a computer aided design (CAD) of an object (550) to be manufactured and output a manufacturing procedure for manufacturing the object (550);
a cloud network in communication with the collaborative control system (501), configured to store information relating to the manufacturing procedure created by the collaborative control system (501);
a plurality of mobile agile manufacturing platforms (540 - 545), each agile manufacturing platform (540 - 545) in communication with the cloud network, and configured to receive information relating to the manufacture of the object (550) in the form of manufacturing tasks assigned to each of the plurality of mobile agile manufacturing platforms (540 - 545), and wherein each agile manufacturing platform (540 - 545) includes a communication module for transmitting state information about the state of the manufacturing task assigned to an corresponding agile manufacturing platform (540 - 545) for storage in the cloud network.

2. The collaborative manufacturing system of Claim 1, wherein the collaborative control system (500) comprises:
a computer processor;
a CAD module for analysis of tasks related to CAD;
a computer aided engineering (CAE) module for analysis of tasks relating to CAE; and
a computer aided manufacturing (CAM) module for analysis of tasks relating to CAM.

3. The collaborative manufacturing system of Claim 2, wherein the computer processor is configured to define a plurality of tasks in the manufacturing procedure, each task being associated with a corresponding one of the plurality of agile manufacturing platforms (540 - 545).

4. The collaborative manufacturing system of Claim 1, wherein the cloud network comprises a distributed database storage network.

5. The collaborative manufacturing system of Claim 1, wherein each of the agile manufacturing platforms (540 - 545) comprises a system of articulated legs (305) for mobility and at least one articulated robotic arm (307) for performing manufacturing tasks.

6. The collaborative manufacturing system of Claim 5, wherein each of the agile manufacturing platforms (540 - 545) further comprises a communications module for communication information relating to a state of a manufacturing task assigned to the corresponding agile manufacturing platform (540 - 545) to the cloud network for storage in a distributed database storage network within the cloud network.

7. The collaborative manufacturing system of Claim 16, wherein the computer processor of the collaborative control system is configured to receive the information relating to the state of a manufacturing task for each of the plurality of agile manufacturing platforms (540 - 545) from the cloud network, re-analyze the manufacturing procedure based on the updated state information and define a new set of manufacturing tasks in an updated manufacturing procedure based on the re-analysis.

8. A method for collaborative manufacture of an object (550), comprising:
in a computer processor of a collaborative control system (501), a computer aided design (CAD) representative of an object (550) to be manufactured;
in the computer processor of the collaborative control system, performing analysis based on CAD, computer aided engineering (CAE) and computer aided manufacturing (CAM);
in the computer processor, generating a manufacturing procedure comprising a plurality of manufacturing tasks;
in the computer processor, assigning each of the plurality of manufacturing tasks to one of a plurality of agile manufacturing platforms (540 - 545);
communicating, by the computer processor, the plurality of manufacturing tasks to a distributed database network;
receiving, by the computer processor, updated state information relating to the current state of the plurality of manufacturing tasks;
re-analyzing the updated state information based on CAD, CAE and CAM; and redefining and reassigning a plurality of updated manufacturing tasks based on the re-analysis.

9. The method of Claim 8, further comprising:
in the computer processor, receiving information from a first agile manufacturing (540 - 545) platform representative of a condition that the first agile manufacturing platform (540 - 545) is going offline, and of a current state of a first manufacturing task assigned to the first agile manufacturing platform (540 - 545);
reassigning the balance of the manufacturing task assigned to the first agile manufacturing platform (540 - 545) to a second agile manufacturing platform (540 - 545); and
communicating via the distributed database network, the reassigned balance of the first manufacturing task to the second agile manufacturing platform (540 - 545).

10. The method of claim 9, wherein the first agile manufacturing platform (540 - 545) is configured as a robotic arm (307) mounted on a moveable platform (581), the moveable platform (581) configured to provide translational movement parallel to an area containing one or more work pieces to be manufactured.

11. The method of claim 10, wherein the moveable platform (581) is supported on a linear rail system.

12. The method of claim 10 wherein the moveable platform (581) is supported by a mobile platform configured to movement both parallel and normal to the area containing the one or more work pieces to be manufactured.

13. The method of Claim 8, wherein the plurality of manufacturing tasks are divided at least in part on a plurality of vertical blocks each vertical block representing a layer of the object (550) to be manufactured.
